# EUROPÄISCHE PATENTANMELDUNG

(11) **EP 2 570 654 A2**
(43) Veröffentlichungstag der Anmeldung: **20.03.2013**
(21) Anmeldenummer: 12006400.1
(22) Anmeldetag: 12.09.2012
(51) Int. Cl.: F03D 1/00

(54) **Schutzeinrichtung für ein Rotorblatt einer Windenergieanlage**

(30) Priorität: 13.09.2011 DE 102011113482
(71) Anmelder: Nordex Energy GmbH, 22419 Hamburg (DE)
(72) Erfinder: Klein, Hendrik, 18147 Rostock (DE); Vogl, Christian, 18055 Rostock (DE); Petzold, Andreas, 23909 Ratzeburg (DE); Miller, Andrea, 22307 Hamburg (DE)
(74) Vertreter: Schildberg, Peter

(57) **Zusammenfassung**

Schutzeinrichtung für ein Rotorblatt einer Windenergieanlage mit einer Rotorblatthinterkante und einer Rotorblattnasenkante, die folgendes aufweist:
- einen Hinterkantenschutz für das Rotorblatt,
- mindestens einen Gurt, der mit dem Hinterkantenschutz verbindbar ist und
- einen Nasenkantenschutz für das Rotorblatt, der mit dem mindestens einen Gurt verbindbar ist und eine Vielzahl von länglichen Anlageelementen aufweist, die derart miteinander verbunden sind, dass der Nasenkantenschutz mit seinen Anlageelementen an die Nasenkante des Rotorblatts angelegt werden kann.

## Beschreibung

Die vorliegende Erfindung betrifft eine Schutzeinrichtung für ein Rotorblatt einer Windenergieanlage.

Rotorblätter weisen eine teilweise beträchtliche Länge auf und werden mit speziellen Transporteinrichtungen über Land und über See transportiert. Neben dem Einsatz von geeigneten Transporteinrichtungen besteht bei dem Transport von Rotorblättern stets das Bedürfnis, das Rotorblatt während des Transports vor Beschädigungen zu schützen.

Aus WO 2008/004195 A2 ist eine Verpackung zum Transport von Rotorblättern bekannt geworden. Für den Transport sind drei Transportbeschläge für das Rotorblatt vorgesehen, wobei der blattwurzelseitige und der blattspitzenseitige Transportbeschlag an die Geometrie des Rotorblatts angepasst sind. Der dritte Transportbeschlag wird im Bereich der Rotorblattmitte angebracht und stellt sicher, dass das Rotorblatt in einer Position transportiert werden kann, in welcher die Nasenkanten nach unten und die Hinterkante nach oben weist.

Aus WO 2010/070388 A1 ist ein Paar von Transportbeschlägen bekannt geworden, bei denen drei Rotorblätter für eine Windenergieanlage gemeinsam transportiert und verladen werden können. Der Transportbeschlag sieht vor, dass zwei Rotorblätter im Bereich ihrer Rotorblattwurzel mit einem ersten, im Wesentlichen dreieckigen Transportbeschlag verbunden werden. Das dritte Rotorblatt kann mit seiner Rotorblattspitze zu den Blattwurzeln der beiden anderen Rotorblätter weisend transportiert werden. Ein zweiter Transportbeschlag sichert das dritte Rotorblatt mit einer im Wesentlichen senkrechten Position im Bereich seiner Blattwurzel und arretiert gleichzeitig die beiden ersten Rotorblätter im Bereich ihrer Blattspitzen. Aus EP 2 330 291 A2 ist ein Paar von Transportbeschlägen bekannt geworden, dass einen gemeinsamen Transport von zwei in entgegengesetzter Richtung zueinander positionierten Rotorblättern erlaubt. Der Transportbeschlag besitzt einen Rahmen zur Befestigung eines Rotorblatts im Bereich seiner Blattwurzel und einen zweiten, dazu beabstandeten Rahmen zur Befestigung des anderen Rotorblatts im Bereich seiner Blattspitze.

Aus EP 2 333 315 A2 ist ein weiterer Transportbeschlag für den Transport von zwei in entgegengesetzter Richtung zueinander orientierten Rotorblättern bekannt, bei dem jedes der beiden Rotorblätter durch einen blattwurzelseitigen Transportbeschlag befestigt ist und ein Zwischenbeschlag ungefähr in der Mitte der beiden Rotorblätter diese miteinander verbindet.

Aus EP 1 836 389 B1 ist eine Verpackungsvorrichtung zum Transport von Rotorblättern bekannt geworden, bei der zu transportierende Rotorblätter in einen Transportrahmen eingelegt werden können. Der Transportrahmen weist hierfür Gurte auf, in die das Rotorblatt eingehängt werden kann.

Aus EP 2 105 349 B1 ist ein Fahrzeug für den Transport eines langen Windmühlenflügels bekannt worden, bei dem der Windmühlenflügel mit seiner Blattwurzel in einem Transportbeschlag an einem Zugfahrzeug befestigt und im Bereich seiner Blattspitze durch das Rotorblatt umspannende Bügel auf einem nicht angetriebenen Fahrzeug lenkbar gelagert ist.

Aus US 2010/0252977 A1 ist ein Transportsystem für Rotorblätter oder für Holme von Rotorblättern bekannt geworden, bei dem das Rotorblatt oder der Holm im Bereich der Blattwurzel in einer Rahmenstruktur gehalten wird. Ungefähr im Bereich der Rotorblattmitte ist eine Rolleinrichtung vorgesehen, in die das Rotorblatt oder der Holm eingelegt wird. Die Rolleinrichtung ist dabei so ausgelegt, dass mehrere Rotorblätter oder Holme in einem Verbund transportiert werden können.

Aus WO 2010/034732 A1 ist ein teleskopisch in seiner Länge veränderbares Fahrzeug für den Transport eines Rotorblatts einer Windenergieanlage bekannt geworden, bei dem die Rotorblattspitze voran zu dem Kopf des schleppenden Fahrzeugs weist und die Rotorblattwurzel im Bereich des Hecks angeordnet ist.

Der Erfindung liegt die Aufgabe zugrunde, eine Schutzeinrichtung für ein zu transportierendes Rotorblatt bereitzustellen, die mit einfachen Mitteln an unterschiedlich dimensionierte Rotorblätter anpassbar ist, um diese während des Transports zu schützen.

Erfindungsgemäß wird die Aufgabe durch eine Vorrichtung mit den Merkmalen aus Anspruch 1 gelöst. Vorteilhafte Ausgestaltungen bilden den Gegenstand der Unteransprüche.

Die erfindungsgemäße Schutzeinrichtung ist vorgesehen und bestimmt für ein Rotorblatt mit einer Hinterkante und einer Nasenkante, wie es bei Windenergieanlagen eingesetzt wird. Die Schutzeinrichtung besitzt einen Hinterkantenschutz, mindestens einen Gurt sowie einen Nasenkantenschutz. Der Hinterkantenschutz ist für das Rotorblatt im Bereich seiner Hinterkante vorgesehen. Die Hinterkante eines Rotorblatts ist oft sehr dünn ausgebildet und benötigt daher besonderen Schutz. Der Hinterkantenschutz ist mit mindestens einem Gurt verbindbar, um ihn an dem Rotorblatt und seiner Hinterkante zu sichern. Ferner ist erfindungsgemäß ein Nasenkantenschutz für das Rotorblatt vorgesehen, der ebenfalls mit dem mindestens einen Gurt verbindbar ist und eine Vielzahl von länglichen Anlageelementen besitzt, die derart miteinander verbunden sind, dass der Nasenkantenschutz mit seinen Anlageelementen an die Nasenkante des Rotorblatts angelegt werden kann. Der Nasenkantenschutz weist mehrere separat ausgebildete längliche Anlageelemente auf. Die Anlageelemente sind miteinander verbunden, um eine Art flexible Matte zu bilden, die, um die Nasenkante des Rotorblattes gelegt, durch den mindestens einen Gurt gesichert ist. Die erfindungsgemäße Schutzeinrichtung für das Rotorblatt ist durch den aus einer Vielzahl von länglichen Anlageelementen gebildeten Nasenkantenschutz an Rotorblätter mit unterschiedlicher Geometrie leicht anpassbar. Die erfindungsgemäße Schutzeinrichtung schützt mit ihrem Hinterkantenschutz und ihrem Nasenkantenschutz zwei gegen mechanische Beschädigungen empfindliche Bereiche des Rotorblatts und eignet sich insofern besonders gut für den Transport des Rotorblatts.

In einer bevorzugten Ausgestaltung sind zwei Gurte vorgesehen, die jeweils an ihren Enden mit dem Hinterkantenschutz und dem Nasenkantenschutz verbindbar sind. Bei dieser Ausgestaltung werden durch die Verwendung von zwei Gurten der Hinterkantenschutz und der Nasenkantenschutz auf dem schützenden Rotorblatt befestigt, wobei jeweils ein Gurt auf der Saugseite und der Druckseite verläuft. Bevorzugt können auch vier Gurte vorgesehen sein, die jeweils mit dem äußeren Bereich des Hinterkantenschutzes und des Nasenkantenschutzes verbindbar sind, so dass jeweils zwei Gurte auf der Saugseite und der Druckseite verlaufen.

In einer alternativen Ausgestaltung ist ein vollständig oder nahezu vollständig umlaufender Gurt vorgesehen, der mit seinen Enden mit dem Hinterkantenschutz oder dem Nasenkantenschutz verbindbar ist. Bei dieser Ausgestaltung wird ein Gurt beispielsweise mit dem Nasenkantenschutz verbunden, um das Rotorblatt herum unter Verbindung mit dem Hinterkantenschutz zu dem Nasenkantenschutz zurückgeführt, wo er dann befestigt werden kann. Auf diese Weise werden auch mit einen einzigen Gurt Hinterkantenschutz und Nasenkantenschutz an dem zu schützenden Rotorblatt gehalten. Bevorzugt können auch zwei Gurte vorgesehen sein, die mit dem äußeren Bereich des Hinterkantenschutzes oder des Nasenkantenschutzes verbindbar sind.

In einer bevorzugten Ausgestaltung besitzen die Anlageelemente des Nasenkantenschutzes auf ihrer dem Rotorblatt zugewandten Seite Schutzelemente. Bevorzugt ist ein über die gesamte Länge des Anlageelementes verlaufendes Schutzelement an jedem Anlageelement vorgesehen. Zweckmäßigerweise besteht das Schutzelement aus einem Polster aus Nylon und/oder Neopren. Auf diese Weise können auf die Schutzeinrichtung beim Transport, beispielsweise durch Transportgurte oder Transportbeschläge aufgebrachte Kräfte gedämpft und auf die Fläche der Schutzelemente ohne eine Beschädigung der Oberfläche der Rotorblattwandung verteilt werden.

In einer bevorzugten Ausgestaltung sind die Anlageelemente untereinander über mindestens ein biegbares, zugfestes Verbindungselement miteinander verbunden. Solche biegbaren, zugfesten Verbindungselemente können beispielsweise aus Seilen, Gurten, Matten oder mit Gelenken versehenen Stangen bestehen. Die Verbindungselemente sind derart gestaltet, dass die Anlageelemente quer zu ihrer Längsrichtung gegeneinander bewegt werden können. Bevorzugt weisen die Verbindungelemente an ihren Enden Anschlagösen auf, an den die Gurte befestigt werden können.

In einer bevorzugten Ausgestaltung weisen die Anlageelemente quer zu ihrer Längsrichtung jeweils mindestens eine Durchgangsbohrung auf, durch die ein biegbares und zugfestes Verbindungselement geführt ist. Durch das Verbindungselement sind die Anlageelemente miteinander verbunden und können quer ihrer Längsrichtung bewegt werden, um einen gut anliegenden Nasenkantenschutz zu bilden. Bevorzugt ist jedes Anlageelement mit mindestens zwei Durchgangsbohrungen an den Enden des Anlageelements versehen.

In einer bevorzugten Ausgestaltung ist zwischen jeweils zwei Anlageelementen auf dem Verbindungselement ein Abstandskörper angeordnet, der einen Mindestabstand der Anlageelemente sicherstellt. Die Abstandskörper können beispielsweise frei beweglich auf den Verbindungselementen angeordnet sein, so dass sie sich in ihrer Lage an das Rotorblattprofil im Bereich Nasenkante anpassen können.

In einer bevorzugten Ausgestaltung ist jedes Anlageelement jeweils aus einem Metallprofil hergestellt. Hierdurch besitzen die Anlageelemente in Längsrichtung eine ausreichende Steifigkeit, um das Rotorblatt im Bereich der Rotorblattnase ausreichend zu schützen.

Bevorzugt ist mindestens ein Anlageelement auf seiner von dem Rotorblatt abgewandeten Seite mit Haltemitteln ausgestattet. Die Haltemittel erlauben es, die Anlageelemente bei der Montage richtig an dem Rotorblatt zu positionieren.

Zweckmäßigerweise kann das Haltemittel auch zur Aufnahme eines Hebe- oder Transportgurtes für das Rotorblatt vorgesehen sein. Hierdurch entsteht zudem der Vorteil, dass die angreifenden Kräfte des Hebe- oder Transportgurtes über das Anlageelement gleichmäßig auf die Rotorblattwandung verteilt werden.

Für eine sichere Montage der Schutzeinrichtung werden Hinterkantenschutz und Nasenkantenschutz mit dem mindestens einen Gurt gegeneinander verspannt.

Eine bevorzugte Ausführung der erfindungsgemäßen Schutzeinrichtung wird nachfolgend anhand der Figuren näher beschrieben. Es zeigt:
- Fig. 1: einen Querschnitt durch ein Rotorblatt, das mit einer Schutzeinrichtung versehen ist,
- Fig. 2: eine perspektivische Ansicht eines Anlageelements der Schutzeinrichtung und
- Fig. 3: einen Querschnitt durch ein Rotorblatt im Bereich der Nasenkante mit einer Schutzeinrichtung in der Detailansicht.

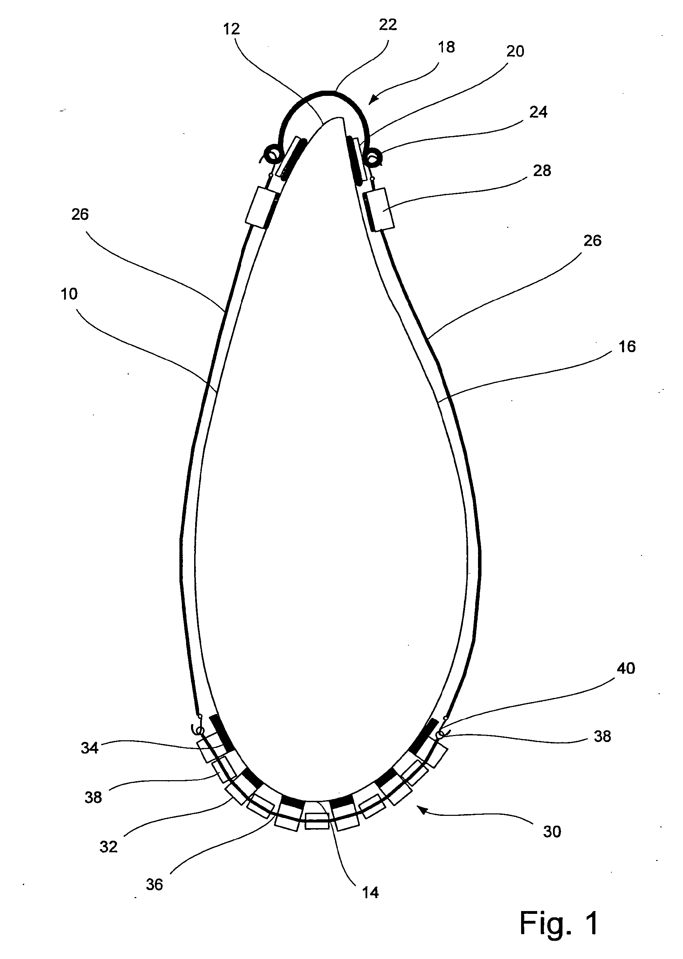

Fig. 1 zeigt einen Querschnitt durch ein Rotorblatt 10, dessen Rotorblatthinterkante 12 oben und dessen Rotorblattnasenkante 14 unten in Fig. 1 dargestellt ist. Das Rotorblatt 10 besitzt eine geschlossene umlaufende Wandung 16. Der innere Aufbau des Rotorblatts 10 ist zur besseren Übersicht in Fig. 1 nicht dargestellt.

Die Rotorblatthinterkante 12 trägt einen Hinterkantenschutz 18, der zwei an der Rotorblattwandung 16 anliegende Wangen 20 besitzt. Die Wangen 20 sind über eine Spange 22 miteinander verbunden und werden für einen festen Sitz auf der Rotorblatthinterkante gegen die Rotorblattwandung 16 gepresst. Im Bereich der Wangen 20 besitzt der Hinterkantenschutz Laschen 24, in die jeweils ein Gurt 26 eingehakt ist. Der Gurt 26 ist jeweils mit einem Spannmittel 28 versehen.

Auf der gegenüberliegenden Nasenkante ist ein Nasenkantenschutz 30 vorgesehen. Der Nasenkantenschutz 30 besitzt beabstandet zueinander verlaufende Anlageelemente 32, die um die Nasenkante herum angeordnet sind. Die Anlageelemente 32 besitzen Anlagepolster 34, mit denen sie an der Wandung 16 des Rotorblatts anliegen. Durch die Anlageelemente 32 hindurch ist ein als Spannseil 36 ausgebildetes Verbindungselement geführt, auf dem Abstandskörper 39 angeordnet sind. Das Spannseil 36 besitzt an seinen beiden Enden Ösen 38, an denen die Haken 40 der Spanngurte 26 angeschlagen sind. Durch Betätigen der Spannmittel 28 werden so die Anlageelemente 32 gegen die Hinterkante verspannt.

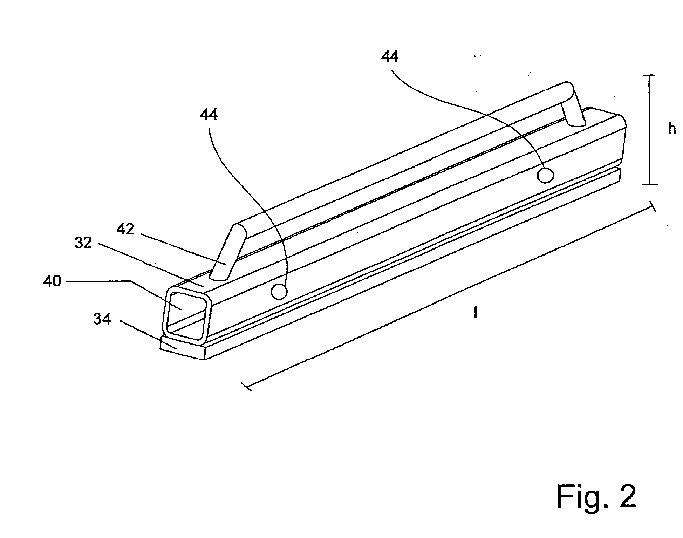

Fig. 2 zeigt eine perspektivische Ansicht eines Anlageelements 32. Das Anlageelement 32 besteht aus einem hohlen Metallprofil, das ungefähr einen quadratischen Querschnitt besitzt. Zur Gewichtsersparnis ist das Anlageelement 32 hohl ausgebildet. Auf der zum Rotorblatt zugewandten Seite trägt das Anlageelement 32 eine Polsterung 34, die beispielsweise aus Nylon oder Neopren ausgeführt sein kann. Die Länge 1 des Anlageelements beträgt ungefähr 100 cm. Die Höhe h beläuft sich auf 10 cm. Durch die Durchgangsbohrungen 44 verläuft im eingebauten Zustand des Anlageelements 32 das als Spannseil ausgebildete Verbindungselement (nicht dargestellt). In dem gezeigten Ausführungsbeispiel ist auf der von dem Rotorblatt abgewandten Seite des Anlageelements 32 ein Griff 42 vorgesehen. Der Griff 42 erlaubt es, bei der Montage der Schutzeinrichtung das Anlageelement einfach vor einem Spannen der Gurte 48 an dem Rotorblatt zu positionieren.

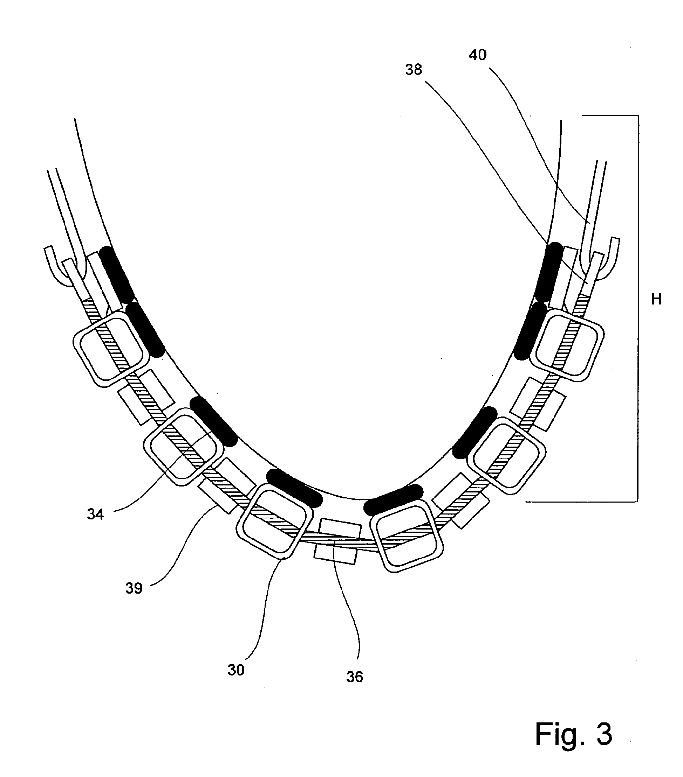

Fig. 3 zeigt eine Detailansicht des Nasenkantenschutzes. Deutlich zu erkennen ist, dass ein mit Ösen 38 versehenes Spannseil 36 durch die im Querschnitt im Wesentlichen quadratischen Anlageelemente 32 geführt ist. Zwischen den benachbarten Anlageelementen 32 befindet sich jeweils ein Abstandskörper 39, der einen Mindestabstand zwischen benachbarten Anlageelementen sicherstellt. Von dem Spanngurt 26 ist in Fig. 3 der Haken 40 zu erkennen. Die Griffe 42 der Spannelemente sind in Fig. 3 nicht dargestellt.

Die in Fig. 3 eingezeichnete Höhe H beträgt ungefähr 20 cm, so dass ein Rotorblatt im Bereich seiner Nasenkante auch seitlich geschützt ist. Durch die flexible Ausgestaltung des Nasenkantenschutzes kann dieser für unterschiedliche Geometrien der Nasenkante eingesetzt werden.

## Patentansprüche

1. Schutzeinrichtung für ein Rotorblatt (10) einer Windenergieanlage mit einer Rotorblatthinterkante (12) und einer Rotorblattnasenkante (14), die folgendes aufweist:
- einen Hinterkantenschutz (18) für das Rotorblatt (10),
- mindestens einen Gurt (26), der mit dem Hinterkantenschutz (18) verbindbar ist und
- einen Nasenkantenschutz (30) für das Rotorblatt (10), der mit dem mindestens einen Gurt (26) verbindbar ist und eine Vielzahl von länglichen Anlageelementen (32) aufweist, die derart miteinander verbunden sind, dass der Nasenkantenschutz (30) mit seinen Anlageelementen (32) an die Nasenkante des Rotorblatts angelegt werden kann.

2. Schutzeinrichtung nach Anspruch 1, **dadurch gekennzeichnet, dass** mindestens zwei Gurte (26) vorgesehen sind, die jeweils an ihren Enden mit dem Hinterkantenschutz (18) und dem Nasenkantenschutz (30) verbindbar sind.

3. Schutzeinrichtung nach Anspruch 1, **dadurch gekennzeichnet, dass** mindestens ein umlaufender Gurt vorgesehen ist, der mit seinen Enden mit dem Hinterkantenschutz (18) oder dem Nasenkantenschutz (30) verbindbar ist.

4. Schutzeinrichtung nach einem der Ansprüche 1 bis 3, **dadurch gekennzeichnet, dass** die Anlageelemente (32) auf ihrer dem Rotorblatt (10) zugewandten Seite mit einem Schutzelement (34) versehen sind.

5. Schutzeinrichtung nach Anspruch 4, **dadurch gekennzeichnet, dass** als Schutzelement (34) ein Polster aus Nylon und/oder Neopren vorgesehen ist.

6. Schutzeinrichtung nach einem der Ansprüche 1 bis 5, **dadurch gekennzeichnet, dass** die Anlageelemente (32) untereinander über biegbare, zugfeste Verbindungselemente (36) miteinander verbunden sind.

7. Schutzeinrichtung nach einem der Ansprüche 1 bis 6, **dadurch gekennzeichnet, dass** die Anlageelemente (32) quer zu ihrer Längsrichtung mindestens eine Querbohrung besitzen und das biegbare und zugfeste Verbindungselement durch die mindestens eine Querbohrung der Anlageelemente (32) geführt ist.

8. Schutzeinrichtung nach Anspruch 7, **dadurch gekennzeichnet, dass** jedes Anlageelement (32) mindestens zwei Querbohrungen besitzt.

9. Schutzeinrichtung nach einem der Ansprüche 6 bis 8, **dadurch gekennzeichnet, dass** zwischen den Anlageelementen (32) auf dem Verbindungselement (36) Abstandskörper (39) angeordnet sind, die einen Mindestabstand zwischen benachbarten Anlageelementen (32) sicherstellen.

10. Schutzeinrichtung nach einem der Ansprüche 1 bis 9, **dadurch gekennzeichnet, dass** die Anlageelemente (32) jeweils ein Profil aus Metall aufweisen.

11. Schutzeinrichtung nach Anspruch 10, **dadurch gekennzeichnet, dass** mindestens ein Anlageelement auf seiner von dem Rotorblatt abgewandten Seite mit einem Haltemittel (42) versehen ist.

12. Schutzeinrichtung nach Anspruch 11, **dadurch gekennzeichnet, dass** das Haltemittel zum Anlegen eines Hebe- oder Transportgurtes vorgesehen ist.

13. Schutzeinrichtung nach einem der Ansprüche 1 bis 12, **dadurch gekennzeichnet, dass** der Hinterkantenschutz und der Nasenkantenschutz über den mindestens einen Gurt gegeneinander verspannbar sind.
